# EUROPÄISCHE PATENTANMELDUNG

(11) **EP 3 305 147 A1**
(43) Veröffentlichungstag der Anmeldung: **11.04.2018**
(21) Anmeldenummer: 17020460.6
(22) Anmeldetag: 07.10.2017
(51) Int. Cl.: A47J 37/06, A47J 37/07

(54) **REGULIERBARES GRILLGERÄT**

(30) Priorität: 07.10.2016 EP 16002165
(71) Anmelder: Schunke, Michael, 06242 Braunsbedra, OT Großkayna (DE)
(72) Erfinder: Dögel, Mathias, 06184 Landsberg OT Golma (DE); Schunke, Michael, 06242 Braunsbedra OT Großkayna (DE)

(57) **Zusammenfassung**

Die Erfindung betrifft ein kombinierbares Grillgerät mit automatischer Regulierung von physikalischen Parametern.

## Beschreibung

Die Erfindung betrifft ein regulierbares Grillgerät nach dem Oberbegriff des Patentanspruchs 1.

Grillgeräte eignen sich dazu, Nahrungsmittel für den Verzehr bei hoher Temperatur zu garen.

### Stand der Technik:

Nach dem Stand der Technik ist eine Vielzahl von Grillgeräten bekannt. Herkömmliche Grills sind konstruktiv so gestaltet, dass sich an ihrer Oberfläche ein Grillrost (Heizfläche, Heizflächenraum) für die Aufnahme von Lebensmitteln befindet. Solche Grills sind beispielsweise aus US 2015/312964 A1, US 2012/299709 A1, US2013/277353 A1 oder US 2015/0282600 A1 bekannt. Zur Erzeugung von Wärme (Hitze) kann eine geänderte Energiezufuhr dienen. Für den Betrieb mit Grillkohle ist z.B. eine einfache Höhenverstellung möglich. Auch kommen Gas oder Elektroheizungen zum Einsatz. Nachteilig bei all diesen Geräten ist ihre fixierte, fest vorgegebene mechanische Zusammenstellung. Derart sind von den vielen physikalischen Parametern, die zum Grillen infrage kommen, nur wenige durch die mechanische Ausgestaltung des Grills nutzbar.

Ein regulierbarer Gasgrill ist beispielsweise aus US 2010/0132692 A1 bekannt, der eine Kochfläche sowie ein Steuersystem besitzt. Das Steuersystem umfasst eine Benutzerschnittstelleneinheit, die konfiguriert ist, um Grillbetriebseinstellungen zu empfangen, mindestens einen Temperatursensor, der angrenzend an die Kochfläche angeordnet ist und konfiguriert ist, um zumindest eine Temperatur zu erfassen. Die Grillbetriebstemperatur wird von dem mindestens einen Temperatursensor empfangen. Dabei kann automatisch mindestens ein Kraftstoffströmungsventil zum Verändern der Menge an Gas angesteuert werden. Die veränderte Menge an Gas wird dann dem mindestens einen Grillbrenner zugeführt, so dass die Grillbetriebstemperatur auf einer vorbestimmten Temperatur auf Grundlage der Betriebseinstellungen und der Grillbetriebstemperatur gehalten werden kann.
Aus US 5,535,664 ist ein steuerbares Kochgerät mit stapelbaren Kochern bekannt, die auf einer Basis angeordnet sind. Die Basis hat eine Außenwand sowie eine Innenwand und wird von drei Stützbeinen getragen. Ein Heizelement ist zwischen der Außenwand und der Innenwand angebracht. Ein elektrischer Leiterzapfen steht mit dem Heizelement in Verbindung.
Weiterhin ist aus US 2013/0061765 A1 ein automatisiertes Temperaturregelsystem für ein Grillgitter oder eine andere Struktur bekannt, dass eine automatisierte Dämpferanordnung umfasst, die mit einer Entlüftung des Gitters gekoppelt ist. Das System umfasst ferner eine Betriebsflächentemperatursonde zum Übertragen der Temperatur des Arbeitsbereichs des Gitters an die automatisierte Dämpferanordnung, so dass die automatisierte Dämpferanordnung eine vom Benutzer spezifizierte Zielbetriebstemperatur beibehalten kann, um die Verbrennungsraten innerhalb des Gitters zu beeinflussen.
Schließlich ist aus US 2015/0057773 A1 ein dynamisches Konditionierungssystem zur Konditionierung von Nahrungsmitteln bekannt, umfassend einen ersten Konditionierer und einen zweiten Konditionierer. Das System weist ferner einen Leser zum Lesen einer dynamischen Informationskennung auf, das eine Vielzahl von Konditionierungsprotokollen umfasst, wobei die Vielzahl von Konditionierungsprotokollen Anweisungen zum Steuern der Konditionierung eines ersten Teils eines Nahrungsmittels in einem ersten Konditionierer und eines zweiten Teils des Nahrungsmittels in einem zweiten Konditionierer enthält, bei überlappenden Konditionierungszyklen. Das System besitzt eine Steuerung, die so konfiguriert ist, dass sie auf eine aus der Vielzahl von Konditionierungsprotokollen reagieren kann.

Mit diesen Grillgeräten können Nahrungsmittel jedoch nur erhitzt werden. Ein Aufbewahren und zur Verfügungsstellung von Nahrungsmittel z. B. bei unterschiedlichen Temperarturen weisen diese Geräte nicht auf.

### Aufgabenstellung:

Aufgabe der vorliegenden Erfindung ist es daher, ein regulierbares Grillgerät bereitzustellen, mit dem Nahrungsmittel gegrillt werden können und das zudem mit Anordnungen, Gerätschaften verbunden ist oder sie enthält, die geeignet sind, physikalische Parameter wie Temperatur oder Abstand zu überwachen, zu steuern oder zu regeln.

Diese Aufgabe wird nach den Merkmalen des Patentanspruchs 1 gelöst. Die Erfindung betrifft somit ein regulierbares Grillgerät, wobei das regulierbare Grillgerät aus einer Kombination, austauschbarer Teile besteht, wobei die Teile physikalisch messbare Bedingungen zum Zweck des Grillens, Aufbewahrens und zur Verfügungsstellung von Esswaren schaffen, wobei die Teile in unterschiedlichen Zusammenstellungen so angeordnet sein können, dass aus der Kombination der physikalisch messbaren Voraussetzungen zum Zweck des Grillens eine neue Bedingung mit neuen Grilleigenschaften entsteht, welche nicht durch eine räumlich oder zeitlich getrennte Anordnung der Teile zu erreichen ist. Dadurch wird es beispielsweise möglich, dass z.B. durch die Kombination von Heizluft und Infraroterwärmung ein besonderer Grilleffekt erreicht werden kann.
Die Gesamtheit der mechanischen Teile ist in dem Grillgerät so angeordnet, dass bei Fehlen oder Austausch eines Teils, der Zweck des Grillens bei geänderten, messbaren physikalischen Bedingungen erhalten bleibt, wobei ein äußeres Gehäuse zur Anordnung oder mechanischen Verbindung der mechanischen Teile vorhanden ist und die Teile automatisch angesteuert werden können, wobei die Teile von Hand hinzugefügt oder fortgenommen werden können.

Das Grillgerät besteht somit aus der Kombination austauschbarer mechanischer bzw. elektromechanischer Teile. Zudem weist das Grillgerät zumindest eine zum äußeren Gehäuse passende austauschbare Ablagefläche auf, die wahlweise mit einem Schwenkmechanismus automatisch oder von Hand genutzt werden kann, um die Oberfläche des Gehäuses zu vergrößern oder zu verkleinern. Die zumindest eine Ablagefläche weist einen Wärmetauscher auf, mit der die Ablagefläche gekühlt oder aber auch beheizt werden kann. Sind zum Beispiel zwei, drei oder gar vier Ablageflächen vorgesehen, so können beispielsweise drei Auflagenflächen gekühlt und eine Ablagefläche kann beheizt werden, um das Grillgut warm zu halten. Bei dem Wärmetauscher kann es sich beispielsweise auch um ein Klappensystem handeln. Beispielsweise können bei einem Grillgerät mit drei Ablageflächen, zwei einander gegenüberliegen Ablageflächen und eine dritte Ablagefläche an der Vorderseite des Grills angeordnet sein. Vorzugsweise sind die Ablageflächen z. B. durch eine Teleskopvorrichtung höhenverstellbar. Das ist vorteilhaft, weil das Grillgerät mit unterschiedlichen Brennstoffen durch den Austausch der regelbaren Energiezufuhr, z. B. wahlweise mit Gas, Holzkohle, Pellets, Elektrizität, Infrarotstrahlung oder Mikrowellen, betrieben werden kann.

Ferner können auch unterschiedliche Esswaren zum Verzehr gegrillt werden. Beispielsweise kann die Energiezufuhr, die mit Holzkohle betrieben wird, gegen Gas oder Elektrizität ausgetauscht werden. Dadurch wird z. B. dass Garen von Lebensmitten über eine lange Zeit mit niedrigen Temperaturen ermöglicht. Möglich wäre aber auch das Grillen mit sehr hohen Temperaturen z.B durch eine Kombination von Gas und Holzkohle, wodurch verschiedene Garstufen gleichzeitig im Lebensmittel erreicht werden können. Aber auch das Warmhalten, Oberflächenbearbeitung z. B. ein Anrösten durch Infrarotwärme oder spezielle Auftau- und Garprozesse durch Mikrowellen wären möglich.

Auch sind wahlweise Teile wie Ablageflächen, Getränkehalterungen, Kühlboxen nutzbar, die je nach Gegebenheit von Vorteil sind. Diese Teile können in einer Ausgestaltung der austauschbaren Ablagefläche, die auch kombinierbar ist, ausgeführt werden. So ist es z.B. möglich in oder an einer Ablagefläche eine Vielzahl von möglichen Halterung zu befestigen, um z.B. Grillspieße, Getränkehalter oder Kühlbehälter zu nutzen. Weiterhin ist es auch denkbar, einen Behälter zur Aufbewahrung von Lebensmitteln zum schonenden Garen zu verwenden. Durch die Kombination verschiedener Bauteile kann das Grillgerät vielfältig über die engere Nutzung als Grillgerät hinaus verwendet werden, um z. B. Auftauvorgänge durchzuführen oder in Kombination mit einer gekühlten Getränkeversorgung als Bar zu dienen.

Die verschiedenen Teile des Grillgerätes können automatisch in ihren Funktionen gesteuert werden und von Hand hinzugefügt oder entfernt werden. So ist die regelbare Energiezufuhr oder das Luftsystem, dass je nach verwendeter Energiezufuhr ausgestaltet ist, austauschbar angeordnet. Durch die unterschiedliche Zusammenstellung der Teile ergeben sich unterschiedliche Grillbedingungen, die durch die physikalisch messbaren Parameter (Daten) erfasst werden können. Deshalb kann das Grillgut so behandelt werden, wie es ohne die Kombination der Teile bei räumlich oder zeitlich getrennter Anordnung nicht zu erreichen wäre.

Der Heizflächenraum für das Grillen wird energetisch durch die Heizfläche mit Wärme (Energie) versorgt. Der Heizflächenraum dient zur Aufnahme von erhitzbaren Lebensmitteln. Das ist allgemein von Heizflächen, wie sie in Küchengeräten oder Grills gegeben sind, bekannt. Es könnten auch technische Ausgestaltungen z. B. für die definierte Erhitzung von Geräten oder Materialien vorliegen, wie sie für Desinfektion, Verformung oder Oberflächengestaltung erforderlich sind. Um diese technischen Effekte zu erreichen, enthält das Grillgerät einen z. B. nach räumlicher Größe regulierbaren Innenraum. Damit wirkt sich die regulierbare Energiezufuhr, die in diesem Innenraum enthalten ist, um eine Temperatur zu erzeugen, unterschiedlich auf den zur Verfügung gestellten Heizflächenraum aus. Dieser Raum wird unter Nutzung der vom physikalischen Sensorsystem zur Verfügung gestellten physikalischen Größen, der Temperatur im Heizflächenraum, regeltechnisch durch die Regelvorrichtung in einem begrenzten Temperarturbereich gehalten.
Durch die vom Sensorsystem zur Verfügung gestellten physikalischen Größen kann die austauschbare Regelvorrichtung z. B. die regulierbare Energiezufuhr ihre Position oder das Luftsystem so steuern, dass die Temperatur nach Vorgabedaten regeltechnisch in einen Bereich gehalten wird. Möglich ist auch die Steuerung in Kombination der regulierbaren Energiezufuhr und des Luftsystems durch die Regelvorrichtung. Damit wird das Ziel erreicht, wonach erhitzbare Lebensmittel im Heizflächenraum konstanten Bedingungen ausgesetzt sind. Möglich sind auch wechselnde Bedingungen, z. B. der Temperatur, im Heizflächenraum durch die steuerbare Mechanik zur Veränderung des Innenraumes, das Ab- und Zuschalten des Luftsystems und der Energiezufuhr z.B. bei Gas oder Elektrizität.
Fehlt ein Geräteteil oder fällt es aus, ist der Grillzweck weiterhin erfüllbar, auch wenn die messbaren Bedingungen und damit Regel- oder Eingreifmöglichkeiten reduziert sind.
Befindet sich die Ablagefläche in Ruhestellung, so schafft diese physikalisch messbare Bedingungen zum Zweck des Grillens von Esswaren oder Getränken, da die Ablagefläche sich in einer bestimmten Entfernung bzw. Position zur Heizfläche befindet. Die Ablagefläche kann über einen Schwenkmechanismus drehbar mit dem Gehäuse verbunden sein, so dass z. B. bei vertikaler oder horizontaler Drehung um 180 Grad die Oberfläche des Gehäuses vergrößert wird, wodurch sich eine Ablagefläche neben der Heizfläche bei verminderter Wärmezufuhr infolge des vergrößerten Abstandes zur Heizfläche ergibt. Die Ablagefläche kann auch z. B. durch eine Einhängeschiene bzw. eine Einhängeeinrichtung so ausgestaltet sein, dass deren Gegenstück, eine Halterung an der Außenwand des Gehäuses vorhanden ist, womit dort die Ablagefläche einzuhängen ist und sich derart eine Vergrößerung der Oberfläche des Gehäuses z. B. zur Ablage von Nahrungsmitteln oder Hilfsgeräten ergibt. Der Drehmechanismus kann durch eine elektromechanische Einrichtung gesteuert werden oder von Hand erfolgen. Wird das Grillgerät nicht genutzt, kann die Ablagefläche in ihrer Grundstellung bleiben, womit sich der Raum für die Abstellung des Grillgeräts verkleinert.

Mit der Nutzung der Ablagefläche ist exemplarisch gezeigt, wie das regulierbare Grillgerät aus einer Kombination mechanischer Teile besteht, die in unterschiedlicher Weise genutzt werden können, um den Zweck des Grillens in einer Weise zu erzielen, wie er bei räumlich oder zeitlich getrennter Anordnung der Teile ansonsten nicht zu erreichen wäre.

In einer bevorzugten Ausführungsform ist das Sensorsystem von außerhalb des Gehäuses des Grillgeräts zugänglich, wobei das Sensorsystem zudem austauschbar ist. Das Sensorsystem kann von Hand oder automatisch in seiner Position innerhalb des Gehäuses verändert werden, womit die physikalischen Größen, die den Heizflächenraum beeinflussen, in unterschiedlichen Positionen gemessen werden können. Beispielsweise kann das Sensorsystem innerhalb des Grillgeräts automatisch verfahrbar angeordnet sein.

Das austauschbare Sensorsystem kann im einfachsten Falle, aus einem elektronischen Temperatursensor bestehen. Denkbar sind auch optische Systeme, die elektromagnetische Strahlung erfassen und für Temperaturauswertungen geeignet sind. Das Sensorsystem kann in unterschiedlichen Positionen angebracht werden und es kann automatisch gesteuert oder von Hand bedient, seine Position verändern, womit die genutzten, physikalischen Größen in unterschiedlicher Positionen erfasst werden können. Es kann so ausgestaltet sein, dass die zu messenden Größen auch über Entfernung zu erfassen sind. So wäre beispielsweise die Messung der Beeinflussung eines Laserstrahls durch Teilchenstaub möglich, wodurch auch gesundheitsschädliche Stoffe erfasst werden können. Mit dem Sensorsystem kann auch registriert werden, ob eine Abdeckung auf dem Grillgerät liegt, um im Falle einer Überhitzung, z. B. bei über 300°C, die Temperatur schnell wieder herunter zu fahren.

In einer weiteren bevorzugten Ausführungsform ist die regulierbare Energiezufuhr derart austauschbar eingebaut, dass unterschiedliche Energiequellen einzeln oder in Kombination genutzt werden können, wobei mit den Daten aus dem Sensorsystem die Energiezufuhr so zu regeln ist, dass eine konstante Energieabgabe ermöglicht wird. Wahlweise kann eine Energieabgabe nach Vorgabedaten gesteuert werden.

Die regulierbare Energiezufuhr kann durch ein System, wie z. B. Gas-, Holzkohle, Pellets, Elektrizität, Infrarot oder Mikrowelle ausgeführt sein. Die jeweilige Energiezufuhr kann einzeln oder in Kombination genutzt werden. So kann eine Gaszufuhr so lange wirksam sein, bis die Holzkohle glüht und eine entsprechende Temperatur abgibt. Die Daten aus dem Sensorsytem können genutzt werden, um die Energiezufuhr zu regeln. So kann die Gaszufuhr beispielsweise abgeschaltet werden, wenn die Holzkohle selbst genügend Wärme abstrahlt. Im einfachsten Fall dient eine geregelte Energiezufuhr ausschließlich zum Konstanthalten einer Temperatur oder es wird eine Energieabgabe so geregelt, dass sie einem vorgegebenen Temperaturverlauf im Heizflächenraum folgt.

Vorzugsweise ist die vertikale wie horizontale Position der Energiezufuhr veränderbar, wozu eine austauschbare, automatisch oder von Hand steuerbare Mechanik vorgesehen ist. Dabei kann die vertikale wie horizontale Position der Energiezufuhr variiert werden. Das wird durch eine austauschbare, automatisch oder von Hand steuerbare Mechanik gewährleistet. Das kann z. B. durch eine Ständereinrichtung gelöst sein. Es können auch Laufschienen in der Gehäusewand vorhanden sein. Es kann auch eine Dreheinrichtung ergänzend oder alternativ vorhanden sein, um horizontale Bewegungen oder kombinierte horizontale, vertikale Bewegungen zu ermöglichen. Das Variieren der Position der Energiezufuhr kann von Hand oder durch Daten vom Sensorsystem geregelt werden. Letztlich wird dadurch die Temperatur auf der Heizfläche reguliert bzw. verändert. Für die Automatik können Heiz- bzw. Temperaturkurven vorgegeben sein.

Weiterhin bevorzugt weist das Grillgerät ein austauschbares Luftsystem zur Zufuhr von Frischluft auf, das je nach verwendeter Energiezufuhr ausgestaltet ist und von Hand oder automatisch gesteuert werden kann. Das austauschbar angeordnete Luftsystem ermöglicht eine unterschiedliche Anordnung und Gestaltung der Luftzufuhr, die je nach Grillvorgang oder genutzter Energieart anders ausgestaltet sein kann. Vorzugsweise ist das Luftsystem als austauschbares Gebläsesystem in der Wand des Grillgehäuses untergebracht. So können nicht nur unterschiedliche Luftmengen pro Zeiteinheit zugeführt werden, sondern es können auch unterschiedliche Zufuhrwege bereitgestellt werden. Eine Infraroterwärmung der Speisen kann mit einer Heizluftzufuhr kombiniert werden, womit sich besondere Grilleffekte erreichen lassen. In einfacher Weise kann frische Primärluft in den regulierbaren Innenraum befördert werden, um eine vorgesehene Energieumsetzung, z.B. durch verbrennende Holzkohle, zu gewährleisten. Möglich ist es auch, einen regulierten Kühleffekt durch das Vermischen heißer Verbrennungsgase mit frischer Primärluft zu erzeugen. Zwecks Temperaturregelung ist es auch möglich, eine Mischung aus Gas und Luft oder ein kontrolliertes Abführen von Gasen und Luft mit dem Luftsystem zu erzeugen. Das Luftsystem kann auch von außen manuell bedienbar sein.

In einer anderen bevorzugten Ausführungsform ist gemäß Anspruch 1 die austauschbare Ablagefläche in Teilbereiche aufgeteilt, wobei einige Teilbereiche wärmedämmend ausgestaltet sind.
Einzelne Teilbereiche sind z.B. als Rost, Grillplatten, Keramikflächen oder Isoliermaterialien ausgeführt. Diese Teile sind kombinierbar und können in den Teilbereichen der Ablagefläche unterschiedlich angeordnet werden, so dass sie z. B. in unterschiedlichen Temperaturbereichen liegen. Es kann sich auch um Teile handeln, die ihre eigene Form, Oberfläche oder Struktur oder die von Lebensmitteln oder Materialien verändern können. Wenn sich beispielsweise Umhüllungsmaterialen beim Erwärmen zusammenziehen, können dadurch Lebensmittel eingeschweißt werden.

In einer anderen bevorzugten Ausführungsform ist gemäß Anspruch 1 ein austauschbares Zündsystem mit dem Grillgerät verbunden, so dass das automatische Starten der Energiezufuhr mit der Zündung der Energiezufuhr erfolgt, wobei das Zündsystem der ausgewählten Art der Energieversorgung entspricht. Das Zündsystem kann z.B. aus einem oder mehreren elektronischen Bauteilen bestehen, die den Brennstoff (z.B. Holzkohle) in der Energiezufuhr zünden. Möglich sind auch thermische Methoden der Zündung bzw. Zündungsbeschleunigung wie optische Methoden der Zufuhr von Strahlungsenergie, Einsprühen von Katalysatoren, Zündhilfsmitteln. Die Positionierung des Zündsystems kann sich dabei in Teilen sowohl innerhalb als auch außerhalb des Gerätes befinden.

Bevorzugt ist eine austauschbare Abdeckung vorgesehen, mit dem das Grillgerät abgedeckt werden kann, wobei die Abdeckung wahlweise mit einem Schwenkmechanismus automatisch oder von Hand betätigt werden kann, so dass eine unterschiedliche Schließung oder Öffnung des Heizflächenraums erfolgt. Die austauschbare Abdeckung kann z. B. mit oder ohne Sichtfenster ausgestaltet sein. Durch die Abdeckung erfolgt eine Begrenzung des Heizflächenraumes. Zweck der Abdeckung (Deckel) ist es, durch die Begrenzung, innerhalb des Heizflächenraumes konstante, physikalische Parameter wie z.B. eine konstante Temperatur zu erhalten. Gleichzeitig sollen dort befindliche Lebensmittel oder Gegenstände vor Umwelteinflüssen geschützt werden. Möglich sind auch weitere Nutzungen, wie eine weitere Ablage im aufgeklappten Zustand. Sicherheitstechnisch ist die Abdeckung z. B. mit einem Verschluss zu versehen.

Vorzugsweise ist eine austauschbare Vorrichtung am Gerät zum Empfang und Senden von Daten angebracht, wobei die empfangenen Daten für Regelzwecke der austauschbaren Vorrichtung genutzt werden können, wobei die gesendeten Daten zur entfernten Kontrolle des regulierbaren Grillgeräts verwendet werden können.
Die austauschbare Vorrichtung kann zum Empfang von Daten genutzt werden, die z. B. von einer Mobiltelefon-APP gesendet werden. Es kann sich auch um eine Bluetooth-Schnittstelle handeln. Die empfangenen Daten können für Regelzwecke genutzt werden. Die Regelvorrichtung kann durch Dateneingabe per Hand bedient werden, so dass die eingebebenen Daten für die Regelung bzw. Steuerung der physikalischen Parameter der Geräteteile verwendet werden kann. Die Dateneingabe bzw. der Datenaustausch kann aber auch über elektronische Schnittstellen stattfinden. So könnte eine Bluetooth-Schnittstelle verwendet werden, die per APP in einem Mobiltelefon bedient wird.

Bevorzugt wird die Temperatur im Heizflächenraum durch die austauschbare Regelvorrichtung geregelt. Die Temperatur im Heizflächenraum kann durch die austauschbare Regelvorrichtung, z. B. über einen bestimmten Zeitraum, auf eine konstante Temperatur eingestellt werden.

In einer anderen bevorzugten Ausführungsform ist eine austauschbare Vorrichtung zur Reinigung vorgesehen ist, womit der Innenraum während und nach dem Betrieb gereinigt werden kann. Die austauschbare Vorrichtung zum Reinigen kann im einfachsten Fall ein mechanisches Bauteil, z. B. ein Motor sein, der durch Vibration die Energiezufuhr bei einem Betrieb mit Holzkohle von Verbrennungsrückständen, wie z. B. Asche, befreit. Es kann sich auch um eine Sprühvorrichtung, einen Laserstrahl oder ein elektromagnetisches Feld handeln, womit schwebende Partikel im regulierbaren Innenraum erfasst und ausgesondert werden.

Bevorzugt ist eine austauschbare Energieversorgung im Gehäuse vorhanden, welche die energieverbrauchenden Komponenten mit Energie versorgt. Die austauschbare Energieversorgung kann in verschiedene, räumliche Teilbereiche unterteilt werden, die auch separat höhenverstellt werden können. Somit ist es möglich, dass erhitzbare Lebensmittel auf der Heizfläche verschiedenen Temperaturbereichen ausgesetzt sind. Möglich sind auch eine Variation der Energiezufuhr in den verschiedenen Teilbereichen sowie eine Kombination von verschiedenen Brennstoffen wie beispielsweise Holzkohle, Gas, Elektrizität, Pellets.

Vorteilhafterweise ist gemäß Anspruch 1 eine austauschbare Energiezufuhr zum Starten eines Brennvorganges vorhanden, wobei ein damit verbundener, automatischer Zündmechanismus vorgesehen ist, so dass die Energiezufuhr die Grillfeuerung mit Brennstoff, beispielsweise Pellets oder Holzkohle, so lange mit Hitze versorgt, bis der Brennstoff selbstständig den Heizvorgang aufrechterhalten kann (dauerhafte Wärmeabgabe).

Vorzugsweise ist gemäß Anspruch 1 das Grillgeräte beweglich, wozu eine austauschbare, mechanische oder elektromotorische Fahrhilfe zur Bewegung des Grillgerätes vorgesehen ist. Die Beweglichkeit kann z. B. durch mechanisch zu bedienende Rollen an der Unterseite des Grillgerätes ausgeführt werden, die wahlweise, bei entsprechendem nachträglichem Austausch / Nachrüstung auch elektromotorisch anzusteuern sind. Dabei ist das Gerät manuell oder elektromotorisch zu bewegen. Möglich sind auch Antriebe wie beispielsweise ein Elektromotor, Ketten, Schienen etc.

In einer besonderen Ausführungsform sind Vorrichtungen für ein austauschbares Wendesystem vorhanden, womit die Lebensmittel im Heizflächenraum gewendet werden können. Das austauschbare Wendesystem kann grillbare Lebensmittel aufnehmen, wobei das Wendesystem im Heizflächenraum angeordnet ist. Allgemein bekannt ist die Verwendung von Drehspießen. Eine weitere Möglichkeit ist die Verwendung eines mechanisch beweglichen Rostes, das z.B. durch Rotation der Stäbe Würstchen auf einer Ablagefläche dreht. Aber auch andere Variationen durch Kippen oder Wenden sind möglich. Die Austauschbarkeit gewährleistet, dass z. B. für Fisch andere Vorrichtungen infrage kommen wie für Fleisch, Obst oder Gemüse.

In einer anderen bevorzugten Ausführungsform sind eine oder mehrere austauschbare Beleuchtungen vorgesehen, die sowohl das Gehäuse von innen und/oder auch von außen ausleuchten können.
Im bzw. am Grillgerät kann eine austauschbare Beleuchtung vorgesehen sein, die für das Ausleuchten der Heizfläche, des regulierbaren Innenraumes, der regulierbaren Position und der zu steuernden Energiezufuhr genutzt werden kann. Möglich ist auch eine Beleuchtung von Designelementen oder Logos. Die Leuchten können Licht in unterschiedlichen Farben aussenden.

Weiterhin bevorzugt ist, wenn die austauschbaren Leuchten einen bestimmten Betriebszustand des Grillgeräts anzeigen und/oder einen bestimmten Zustand des Grillgutes anzeigen. Eine Leuchte kann mit ihren Farben bestimmte Zustände des Grillgeräts anzeigen. Eine andere Leuchte kann beispielsweise den aus den Sensordaten abgeleiteten Zustand des Grillgutes anzeigen.

In einer weiteren bevorzugten Ausführungsform ist ein austauschbares Löschsystem mit dem Grillgerät so verbunden ist, dass bei Gefahr ein Löschmittel direkt an den Brandherd geführt wird, wobei das Löschsystem automatisch durch Sensordaten oder von Hand aktiviert werden kann. Das im bzw. am Grillgerät angebrachte Löschsystem kann mittels des Sensorsystems eine zulässige Temperaturüberschreitung (Brand) detektieren, wodurch das Löschsystem mit seinem Löschmittel, z. B. Wasser oder Brandlöschschaum, den Brand löscht. Das Löschsystem kann automatisch oder von Hand aktiviert und bedient werden.

Von Vorteil ist ferner, wenn ein elektronisch lesbarer Identifizierungscode auf einem Träger am Grillgerät angebracht ist. Damit ist das Grillgerät zu identifizieren, was auch elektronisch durch Fotografie oder Laser-Ablesen eines Strichcodes erfolgen kann.

In einer weiteren bevorzugten Ausführungsform ist eine austauschbare Vorrichtung zur Aufnahme, Kühlung und wahlweisen Ausschank von Getränken am Grillgerät vorgesehen. Dazu kann z. B. eine Energieversorgung vorhanden sein, mit der die austauschbare Vorrichtung und damit das Getränk gekühlt wird.

Ein Ausführungsbeispiel wird im Folgenden anhand von Figuren näher beschrieben. Es zeigen:
Figur 1 einen schematischen Aufbau eines regulierbaren Grillgeräts und
Figur 2 eine weitere Ansicht des in Figur 1 gezeigten Grillgeräts.

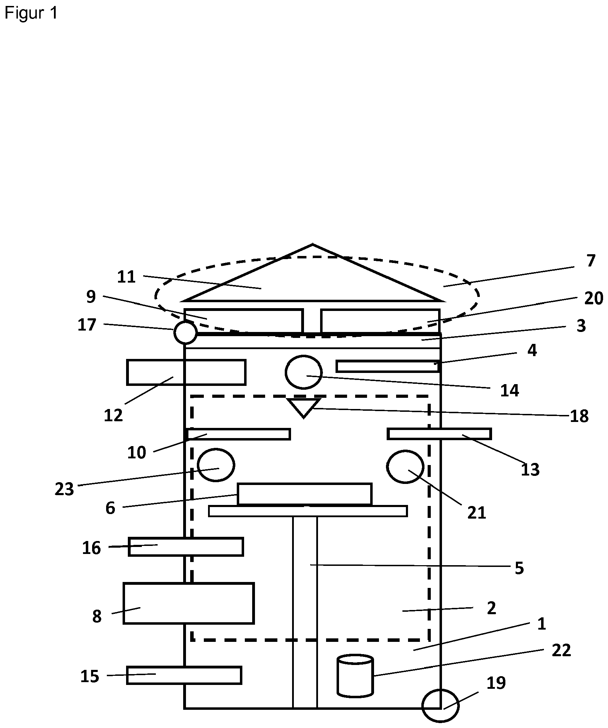

Figur 1 skizziert einen schematischen Aufbau eines regulierbaren Grillgeräts, das die Teile äußeres Gehäuse 1, regulierbarer Innenraum 2, Heizfläche 3, Sensorsystem 4, steuerbare Mechanik zur Veränderung der Position 5, regelbare Energiezufuhr 6, Heizflächenraum 7, Luftsystem 8, Ablagefläche 9, Zündsystem 10, Abdeckung 11, Vorrichtung zum Empfang und Senden von Daten 12, Regelvorrichtung 13, Beleuchtungen 14, Energieversorgungssystem 15, Träger Identifizierungscode 16, Schwenkmechanismus 17, Reinigungseinrichtung 18, Fahrhilfe 19, Wendesystem 20, Löschsystem 21, Getränkekühlung 22 und Frischluftzufuhr 23 umfasst. In dem Gehäuse 1 bzw. am Gehäuse 1 sind sämtliche Teile des regulierbaren Grillgeräts enthalten und vorzugsweise austauschbar verbunden. So kann beispielsweise die Ablagefläche 9 vom Grillgerät getrennt werden oder bei Bedarf in den Schwenkmechanismus 17 eingehängt werden. So ist ebenfalls der regulierbare Innenraum 2, der das Sensorsystem 4, die regulierbare Position 5 mit der zu steuernde Energiezufuhr 6 enthält, mit seinen austauschbaren Einzelteilen so zu ändern, dass zum Zweck des Grillens neue physikalische Bedingungen einstellbar sind. So dient beispielsweise das Sensorsystem 4 zur Erfassung der physikalischen Parameter, die für die regulierbare Position der Energiezufuhr 6 erforderlich sind.
Das Sensorsystem 4 kann innerhalb des Grillgeräts automatisch verfahrbar sein. Dafür kann ein Schienensystem vorgesehen sein, an dem das Sensorsystem 4 angebracht ist. Mittels eines Antriebs kann das Sensorsystem 4 dann innerhalb des Grillgeräts in die gewünschte Position bewegt werden, um dort die Temperatur zu messen. Das Schienensystem sowie der Antrieb sind in der Figur 1 nicht gezeigt.

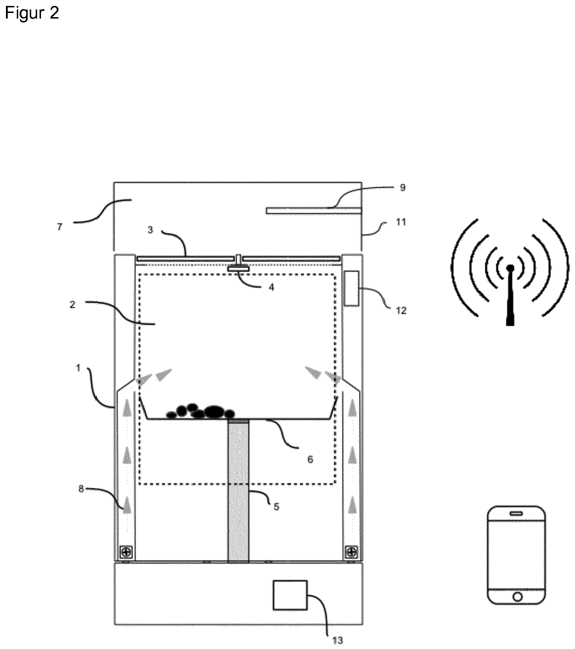

Figur 2 zeigt eine weitere Ansicht des regulierbaren Grillgeräts nach Figur 1, der aus einer Kombination von austauschbaren Teilen besteht. Durch ein Hubsystem 5 kann innerhalb des regulierbaren Innenraumes 2 die Höhe der austauschbaren Glutwanne verstellt werden. Der Temperatursensor 4 erfasst dabei die Temperatur, die sich durch die regulierbare Höhenverstellung 5 während des Abbrennens der Holzkohle an der Heizfläche 3 ergibt. Die Höhe wird mit austauschbaren Regelvorrichtung 13 eingestellt. Über die Regelvorrichtung 13 kann ein Temperaturbereich manuell am Grillgerät oder über z.B. ein Smartphone eingestellt werden. Mit dem austauschbaren Gebläsesystem 8 kann je nach Nutzung von Holzkohle, Gas, Elektrizität, Pellets Luft an die Glutwanne 6 zugeführt werden. Ergänzend kann Primärluft oberhalb der Glutwanne in den regulierbaren Innenraum 2 geblasen werden, was sich auf die geschmacklichen Eigenschaften des Grillgutes auswirkt. Oberhalb der Heizfläche 3 befindet sich eine Abdeckung am Gehäuse 1, in dem sich verschiedene Ablageflächen 9 im Heizflächenraum 7 befinden. Diese Ablageflächen 9 dienen als Ablage für Küchengeräte, Bretter oder Chafings für die Lagerung von Nahrungsmitteln.

## Patentansprüche

1. Regulierbares Grillgerät, wobei das regulierbare Grillgerät aus einer Kombination, austauschbarer Teile besteht, **dadurch gekennzeichnet, dass**
- die austauschbaren Teile physikalisch messbare Bedingungen zum Zweck des Grillens, Aufbewahrens und zur Verfügungsstellung von Esswaren bereitstellen,
- die Teile in unterschiedlichen Zusammenstellungen so angeordnet sind, dass aus der Kombination der physikalisch messbaren Voraussetzungen zum Zweck des Grillens eine neue Bedingung mit neuen Grilleigenschaften entsteht,
- die Gesamtheit der Teile in dem Grillgerät derart angeordnet ist, dass bei Fehlen oder Austausch eines Teiles, der Zweck des Grillens bei geänderten, messbaren physikalischen Bedingungen erhalten bleibt,
- ein äußeres Gehäuse (1) zur Anordnung oder mechanischen Verbindung der mechanischen Teile vorhanden ist,
- die Teile automatisch angesteuert werden können,
- die Teile von Hand hinzugefügt oder entfernt werden können,
- am äußeren Gehäuse (1) zumindest eine austauschbare Ablagefläche (9) vorhanden ist,
- die mit einem Schwenkmechanismus versehen ist,
- so dass die Oberfläche des Gehäuses (1) zu vergrößern oder zu verkleinern ist
- wobei in der zumindest einen Ablagefläche (9) ein Wärmetauscher vorhanden ist,
- mit dem die zumindest eine Ablagefläche (9) heizbar oder kühl bar ist.

2. Regulierbares Grillgerät gemäß Anspruch 1, **dadurch gekennzeichnet,**
- **dass** ein Sensorsystem (4) vorgesehen ist, wobei das Sensorsystem (4) von außerhalb des Gehäuses (1) zugänglich ist,
- **dass** das Sensorsystem (4) austauschbar ist und
- **dass** das Sensorsystem (4) von Hand oder automatisch in seiner Position innerhalb des Gehäuses (1) veränderbar ist,
- womit die physikalischen Größen, die den Heizflächenraum (3) beeinflussen, in unterschiedlichen Positionen messbar sind.

3. Regulierbares Grillgerät gemäß Anspruch 1, **dadurch gekennzeichnet,**
- **dass** die regulierbare Energiezufuhr (6) austauschbar so eingebaut ist,
- **dass** unterschiedliche Energiequellen einzeln oder in Kombination genutzt werden können,
- wobei mit den Daten aus dem Sensorsystem (4) die Energiezufuhr so regelbar ist,
- **dass** eine konstante Energieabgabe ermöglicht wird,
- wobei eine Energieabgabe nach Vorgabedaten steuerbar ist.

4. Regulierbares Grillgerät gemäß Anspruch 1, **dadurch gekennzeichnet,**
- **dass** die vertikale und die horizontale Position der Energiezufuhr (6) veränderbar ist,
- wozu eine austauschbare, automatisch oder von Hand steuerbare Mechanik (5) vorgesehen ist.

5. Regulierbares Grillgerät gemäß Anspruch 1, **dadurch gekennzeichnet,**
- **dass** ein austauschbares Luftsystem (8) zur Zufuhr von Frischluft vorgesehen ist,
- das je nach verwendeter Energiezufuhr ausgestaltet ist und von Hand oder automatisch steuerbar ist.

6. Regulierbares Grillgerät gemäß Anspruch 1, **dadurch gekennzeichnet,**
- **dass** die austauschbare Ablagefläche (9) in Teilbereiche aufgeteilt ist,
- wobei einige Teilbereiche wärmedämmend ausgestaltet sind.

7. Regulierbares Grillgerät gemäß Anspruch 1, **dadurch gekennzeichnet,**
- **dass** ein austauschbares Zündsystem (10) mit dem Grillgerät verbunden ist,
- so dass das automatische Starten der Energiezufuhr (6) mit der Zündung der Energiezufuhr (6) erfolgt,
- wobei das Zündsystem (10) der ausgewählten Art der Energieversorgung entspricht.

8. Regulierbares Grillgerät gemäß Anspruch 1, **dadurch gekennzeichnet,**
- **dass** eine austauschbare Abdeckung (11) mit dem Grillgerät verbunden ist,
- die wahlweise mit einem Schwenkmechanismus automatisch
- oder von Hand genutzt werden kann,
- so dass eine Schließung oder Öffnung des Heizflächenraums (7) möglich ist.

9. Regulierbares Grillgerät gemäß Anspruch 1, **dadurch gekennzeichnet,**
- **dass** eine austauschbare Vorrichtung (12) am Grillgerät zum Empfang und Senden von Daten angebracht ist,
- wobei die empfangenen Daten für Regelzwecke der Vorrichtung (12) genutzt werden können
- wobei die gesendeten Daten zur entfernten Kontrolle des regulierbaren Grillgeräts verwendbar sind.

10. Regulierbares Grillgerät gemäß Anspruch 1, **dadurch gekennzeichnet,**
- **dass** die Temperatur im Heizflächenraum (7) durch die austauschbare Regelvorrichtung (13) regelbar ist.

11. Regulierbares Grillgerät gemäß Anspruch 1, **dadurch gekennzeichnet,**
- **dass** eine austauschbare Vorrichtung (18) zur Reinigung vorgesehen ist, womit der Innenraum (2) während und nach dem Betrieb zu reinigen ist.

12. Regulierbares Grillgerät gemäß Anspruch 1, **dadurch gekennzeichnet,**
- **dass** ein austauschbares Energieversorgungsystem (15) im Gehäuse (1) vorhanden ist,
- welches die energieverbrauchenden Komponenten mit Energie versorgt.

13. Regulierbares Grillgerät gemäß Anspruch 1, **dadurch gekennzeichnet,**
- **dass** eine austauschbare Energiezufuhr zum Starten eines Brennvorganges vorhanden ist
- **dass** ein damit verbundener, automatischer Zündmechanismus vorgesehen ist,
- so dass die Energiezufuhr die Grillfeuerung mit Brennstoff so lange mit Hitze versorgt, bis der Brennstoff selbstständig den Heizvorgang aufrecht erhält.

14. Regulierbares Grillgerät gemäß Anspruch 1, **dadurch gekennzeichnet,**
- **dass** das Grillgerät eine austauschbare, elektromotorische Fahrhilfe (19) zur Positionsveränderung oder Bewegung des Grillgeräts aufweist,
- wodurch das Grillgerät bewegbar ist.

15. Regulierbares Grillgerät gemäß Anspruch 1, **dadurch gekennzeichnet,**
- **dass** Vorrichtungen für ein austauschbares Wendesystem (20) vorhanden sind,
- womit die Lebensmittel im Heizflächenraum (7) zu wenden sind.

16. Regulierbares Grillgerät gemäß Anspruch 1, **dadurch gekennzeichnet,**
- **dass** eine oder mehrere austauschbare Beleuchtungen (14) vorgesehen sind,
- mit denen das Gehäuse (1) von innen und/oder von außen ausleuchtbar ist.

17. Regulierbares Grillgerät gemäß Anspruch 16, **dadurch gekennzeichnet,**
- **dass** mit den austauschbaren Leuchten ein bestimmter Betriebszustand des Grillgeräts
- **dass** ein bestimmter Zustand des Grillgutes anzuzeigen ist.

18. Regulierbares Grillgerät gemäß Anspruch 1, **dadurch gekennzeichnet,**
- **dass** ein austauschbares Löschsystem (21) mit dem Grillgerät derart verbunden ist,
- **dass** bei Gefahr ein im Löschsystem (21) befindliches Löschmittel direkt an den Brandherd geführt wird,
- wobei das Löschsystem (21) automatisch durch Sensordaten oder von Hand aktivierbar ist.

19. Regulierbares Grillgerät gemäß Anspruch 1, **dadurch gekennzeichnet,**
- **dass** ein elektronisch lesbarer Identifizierungscode auf einem Träger (16) des Grillgeräts angebracht ist.

20. Regulierbares Grillgerät gemäß Anspruch 1, **dadurch gekennzeichnet,**
- **dass** eine austauschbare Vorrichtung (22) zur Aufnahme, Kühlung und wahlweisen Ausschank von Getränken vorgesehen ist.
